# EUROPEAN PATENT APPLICATION

(11) **EP 2 390 697 A1**
(43) Date of publication of application: **30.11.2011**
(21) Application number: 11425139.0
(22) Date of filing: 25.05.2011
(51) Int. Cl.: G02B 6/14, G02B 6/38, G02B 6/028

(54) **Connection device for optical fibers**

(30) Priority: 28.05.2010 IT RM20100283
(71) Applicant: JDM Systems S.R.L., 40134 Bologna (BO) (IT)
(72) Inventor: Di Maio, Giovanni, 40134 Bologna (BO) (IT)
(74) Representative: Iannone, Carlo Luigi

(57) **Abstract**

The present invention concerns a connection device (11; 12; 13) for optical fibers, having a transmission section (T) comprising an input connector (21'), to which a single mode or monomodal optical fiber (74') is couplable, an output connector (21 "), to which a multimodal optical fiber (75') is coupleable, and a first and a second portion (30, 40) of multimodal optical fibers offset joined together at a respective end, said optic fiber first portion having the other not joined end arranged in said input connector (21'), so as to be connectable with said single mode optical fiber (74'), and said optical fiber second portion (40) having the other not joined end arranged in said output connector (21 "), so as to be connectable with said multimodal optical fiber (75'). The present invention concerns even a connection cabinet (70) for optical fiber.

## Description

The present invention concerns a connection device for optical fibers.

More specifically the invention relates to a device for connecting optical fibers, in particular for connecting offset optical fibers, which is applicable to optical fibers connection cabinets.

As it is well known, in recent years, the local data networks (LAN - Local Area Network) have been subject to significant changes.

Technological developments and market demands have entailed the transmission of information over optical fiber at ever increasing distances and speed, with lower costs. In particular, the transmitter technology has been developed. It has passed from simple LEDs (Light Emitting Diodes) to the latest generation of laser, which allow very high data transmission rates. When the source of transmission over multimode fiber is a laser, a substantial improvement in performance can still obtained by increasing the effective modal bandwidth available to the signal.

Despite the above sources are of different quality, there are some specific differences that can have a great impact on performances of multimode fiber (Multi-Mode). The space launch of the optical signal in the fiber is one of these differences. In fact, the launch mode affects the spatial and angular distribution of light within the optical fiber, which determines the effective bandwidth of the optical fiber itself. Therefore, sources that result in less efficient bandwidth, do not have appropriate final performances.

Consider that the modal bandwidth (Modal Bandwidth - MBW) describes the frequency response of a multimode fiber and it is a function of the length of the optical fiber, the launch conditions, the source and its wavelength. If the refractive index profile of multimode fiber departs from the theoretical and ideal parabolic behavior during the manufacturing process, creating in the center of the fiber what is commonly called "dip", the relationship between the modal band and the wavelength changes significantly both for multimode fibers of 62,5 m and for those of 50 m. This modification of the refractive index is caused by the evaporation of the dopant elements from the inside of the preform, when it collapses during the well-known manufacturing processes of optical fiber.

A performance improvement in the transmission in multimode fibers can be achieved by exploiting the differences in launch conditions between LED and laser. Since the laser has a much more concentrated beam, only a few central modes of the multimode fiber can be excited. In this way, the intrinsic modal dispersion of multimode fiber is virtually eliminated, resulting in a significant improvement in the modal bandwidth.

However, very low tolerances on the position and size of the excitation beam are required to achieve this result. The so-called phenomenon of "mode mixing" must also be avoided and no defect should be present in the index profile of the fiber.

However, as mentioned above, the presence of a deviation from the ideal profile in the center of the multimode fiber is unfortunately very common for structural reasons.

For this reason, entering a light beam into the fiber optic light beam at a predetermined radial distance can excite modes of medium order in a reliable manner and, above all, repeatable. At present, this is achieved by moving the laser from the center of the fiber core through a junction between two segments of fiber, which have an appropriately determined offset.

Furthermore, in the prior art the transmission of signals by optical fiber is achieved by appropriate cabinets comprising, among other things, one or more laser transmitters housed therein. The signal transmitted by laser exits, as it is known, from a first single-mode optical fiber (single mode) on a self-centering connector. A cable made by a first portion of a single mode optical fiber, that measures typically 1,5-2 meters, and a second portion of the multimode optical fiber, connected one another by an "offset" junction, which produces the offset, are connected to said self-centering connector. The second portion of optical fiber is then connected by a standard connector arranged on the distribution panel of the cabinet, to which, in its turn, the network optical fiber is connected.

This described above cable, made by said single mode optical fiber and said multimode optical fiber, is very expensive because of the junction between the single-mode fiber and the multimode fiber. If we consider that the cabinets for optical fiber connection can have a significant number of signal sources, it is understood that the costs of this kind of connection are very relevant.

In light of the above it is, therefore, an object of the present invention to propose a device for connecting optical fibers capable to overcome the above set out limits.

This and other results are achieved, according to the this invention, by means of a device for connecting optical fibers having an internal offset junction between two multi-mode optical fibers.

Consider, in fact, that there are many advantages in having two portions of a multimode fiber, instead of an input single-mode fiber and an output multimodal fiber. In particular, the insertion loss between fibers is influenced by several parameters:
1. longitudinal offset;
2. cross offset;
3. angular deviation;
4. ellipticity of the core;
5. eccentricity of the core.

All these parameters are very important when two single-mode fibers are connected, because of the small size of their modal radius, about 8 microns at 1310 nm. In this case, an insertion loss between 0,2 and 0,4 dB is common for any type of connector.

When a single mode fiber and a multimode fiber are connected, the connection loss is zero for all practical purposes, because of the large difference of the modal radius of the two fibers and because of the numerical aperture that is much higher in multimode fiber. In other words, with the geometries commonly present in real adapters, the whole power in an input single-mode fiber can be transferred into the multimode fiber, although there is a mismatch in anyone of the five above listed parameters.

On the other hand, a significant loss may be present if there is a high transverse offset between two multimode fibers, even if the input launch is made in a single mode fiber, as the amount of energy outside the more internal part of core of the multimode fiber can be high.

Accurate numerical simulations with a modal solver, show that the loss may be less than 0,1 dB if the offset is less than, or equal to, 15 microns. In our solution, the offset can be adjusted with an accuracy of 0,1 micron. The design provides therefore a very low loss. In this way, it has been clearly shown that the use of offset between multimode-multimode fibers gives an advantage in terms of lower loss compared to a singlemode-multimode solution.

Also note that the introduction of a short piece of multimode fiber, although not ideal, centered on the input single-mode fiber, does not introduce any kind of dis-equalization of the group delay, in view the small length of the piece of fiber used.

Using simple approximations, one can estimate an upper limit to the group delay introduced, which is certainly less than a picosecond. This delay is completely negligible, even at bit rates of 25 Gb/s, where the bit period is 40 ps. It is to be noted that 25 Gb/s bit rate is the highest of any secondary branch in 100 Gigabit Ethernet applications.

In order to confirm these assessments, a set of simulations with a modal solver has been carried out, in which an ideal parabolic profile was compared with a parabolic profile with a Gaussian dip. The dip is 10% of the ideal value, and its width (sigma of the Gaussian curve) is 3 microns.

The simulation results show that the maximum delay introduced by the presence of the first section of multimode fiber axially aligned with the input single-mode fiber is less than 8 femtoseconds, which is negligible for any application.

It is therefore a specific object of the present invention a connection device for optical fibers, having a transmission section comprising an input connector, to which a single mode or monomodal optical fiber can be coupled, an output connector, to which a multimodal optical fiber can be coupled, and a first and a second portion of multimodal optical fibers offset joined together at a respective end, said optic fiber first portion having the other not joined end arranged in said input connector, so as to be connectable with said single mode optical fiber, and said optical fiber second portion having the other not joined end arranged in said output connector, so as to be connectable with said multimodal optical fiber.

According to the invention, said first and second portions of multimodal optical fibers could be inserted in a ferrule comprised of zirconia or equivalent material.

Still according to the invention, said device could comprise a containment shell wherein a housing for the ferrule is obtained.

Advantageously according to the invention, said containment shell could comprise tongues for allowing the insertion or the extraction of said optical fibers to be connected with said input and output connectors.

Furthermore according to the invention, each one of said input and output connectors could be provided with fixing means, suitable to keep in position the connected optical fiber, so that the core of said optical fiber is aligned to the core of the portion of the optical fibers of the input connector or of the output connector.

Still according to the invention, said device could comprise a receiving section, in turn provided with an input connector and an output connector, a fiber optic being connectable to each one of said connectors.

It is a further object of the present invention a connection cabinet for optical fiber, comprising a plurality of optical transmitters, such as a laser or a LED (Light Emitting Diode), each of which emits the output optical signal in a single mode optical fiber to an end of which a connector is provided, and a correspondent plurality of receivers, characterized in that it comprises a distribution panel, provided with a plurality of connection devices as above defined, a connection optical fiber being connected with the connector of each optical transmitter, said connection optical fiber being further connected with said input connector of said transmission sensor of a respective connection device.

According to the invention, said connection optical fiber could be of monomodal type.

Still according to the invention, each one of said adapter devices could be fixed to or integrated in said distribution panel.

Furthermore according to the invention, each receiver could be connected with an optical fiber, said optical fiber being in turn connected with said input connector of said receiving section of the respective connection device.

The present invention will be now described, for illustrative but not limitative purposes, according to its preferred embodiments, with particular reference to the figures of the enclosed drawings, wherein:
figure 1 shows a section view of a first embodiment of the connection device according to the present invention;
figure 2 shows a first detail of the connection device according to figure 1;
figure 3 shows a second detail of the connection device according to figure 1;
figure 4 shows a partial section view of a second embodiment of a connection device according to the present invention;
figure 5 shows a side view of the connection device according to figure 4;
figure 6 shows a plan section of a third embodiment of a connection device according to the present invention;
figure 7 shows a front view of the connection device according to figure 6;
figure 8 shows the internal connections of a cabinet for optical fiber connection, and
figure 9 shows a wiring diagram inside a cabinet for optic fiber connection.

In the various figures, similar parts will be indicated by the same reference numbers.

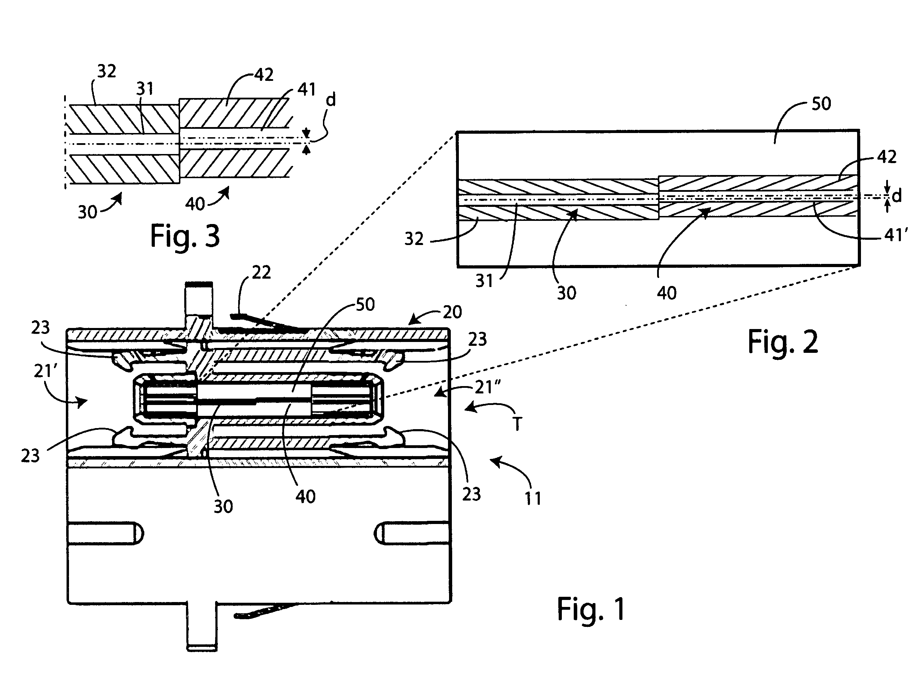

Making reference to figures 1, 2 and 3 a first embodiment of a connection device 11 for optical fibers according to the present invention can be seen, which comprises a shell 20 having an input connector 21' and an output connector 21 ", wherein a single mode fiber and a multimode fiber are respectively inserted. Said connectors 21' and 21" are self-centering.

Said shell 20 has also tongues 22 for facilitating connection to or disconnection from the distribution panel. Moreover, fixing means 23 are also provided in said connectors 21' and 21 ", to keep in position the optical fibers externally connected to the connectors.

Said connection device 11 also includes a first and a second multimode fiber portions, respectively indicated with the references 30 and 40, each having a core 31 and 41, and a cladding 32 and 42. Said multimode fiber portions 30 and 40 are fused together at an end so that their symmetry axes are offset of an amount indicated in the figures by d. The junction between said first and second multimode fiber portion 30 and 40 is shown in figure 3 and is made according to known junction technology of optical fibers.

Said multimode fiber portions 30 and 40 are inserted into a zirconia ferrule 50 or equivalent. The ferrule 50 extends substantially along the entire length of the device 11, comprising both said multimode fiber portions 30, 40. The assembly of said first and second multimode fiber portions 30 and 40 and said ferrule 50 is placed within said shell 20.

The ferrule 50 can be replaced with any other element, that allows the optical fiber portions 30 and 40 joined together to be housed and fixed within the connection device 11.

In particular, figure 2 shows the arrangement of said first and second multimode fiber portions 30 and 40, so as to create the offset d.

For connecting two optical fibers, their ends must be inserted into said connectors 21' and 21" of said connection device 11.

In this way, each of said optical fibers, the first single-mode fiber, inserted in the respective input connector 21' and the second multi-modal fiber inserted in the respective output connector 21 ", is blocked to said connection device 11 by said fixing means 23. Said fixing means 23 also center the position of each optical fiber. In this way, the core of each optical fiber is aligned with the core 31 or 41 of one of the multimode fiber portions 30 or 40 of said connection device 11. In other words, the core 31 (or 41) of the multimodal optical fiber portion 30 (or 40) of said connection device 11 is aligned with the core of the optical fiber inserted into the input connector 21' (or output connector 21 ").

A laser light signal passing through the single mode fiber coupled to said input connector 21' enters the core 31 of said first multimode fiber portion 30 and is launched, under offset condition, in the core 41 of said second multimode fiber portion 40, to be subsequently launched in the second multimode fiber core coupled with the output connector 21". Consider that core 41 of said second optical fiber portion 40 is aligned to said second optical fiber, by the connector 21", which is self-centering. Therefore, the laser signal that enters under offset condition into said second multimode fiber portion 40, enters offset in said second optical fiber coupled with said connector 21" as well.

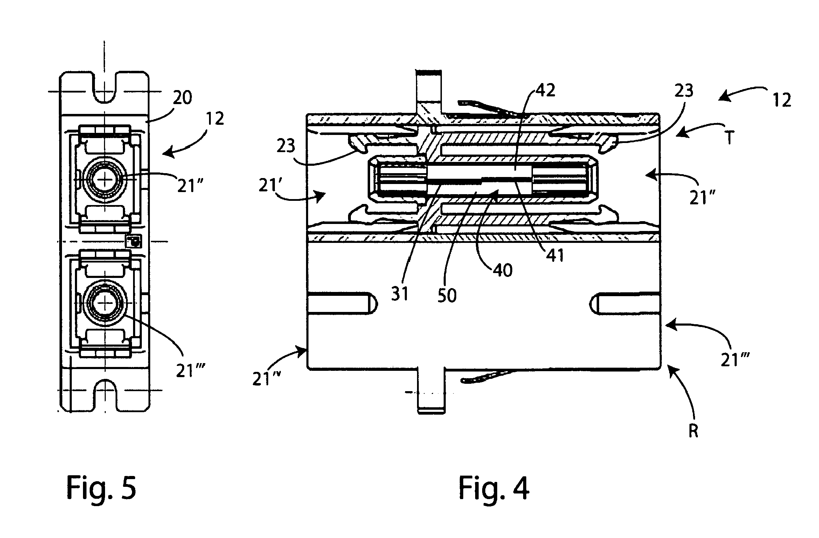

Figures 4 and 5 show a second embodiment of a connection device 12 of duplex SC type (Subscriber Connector), suitable for transmission and reception of signals, according to the present invention. In particular, a duplex SC Universal Connection, which meets the requirements of IEC 61754-4, is shown. In this connection device 12, the diameter of the ferrule 50 is defined to be 2,5 mm.

Said connection device 12 is the combination of a transmission section T, provided with an input connector 21' and an output connector 21", which has a structure very similar to that of figures 1-3, and a receiving section R, with respective first and second connectors 2ⁱⁱⁱ and 23^{iv}, according to the prior art.

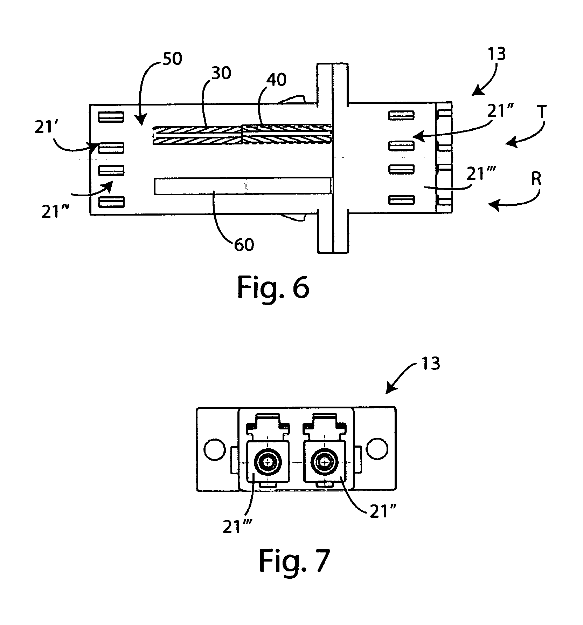

Figures 6 and 7 show a third embodiment of a duplex LC universal connection device 13 that meets the requirements of IEC 61754-20. In this connection device, the diameter of the ferrule 50 is defined to be 1,25 mm. In order to maintain the same length even in the receiving section R of the connection device 13, where, strictly speaking, the presence of the offset fiber would not be necessary, a single multimode fiber piece 60 can possibly be inserted.

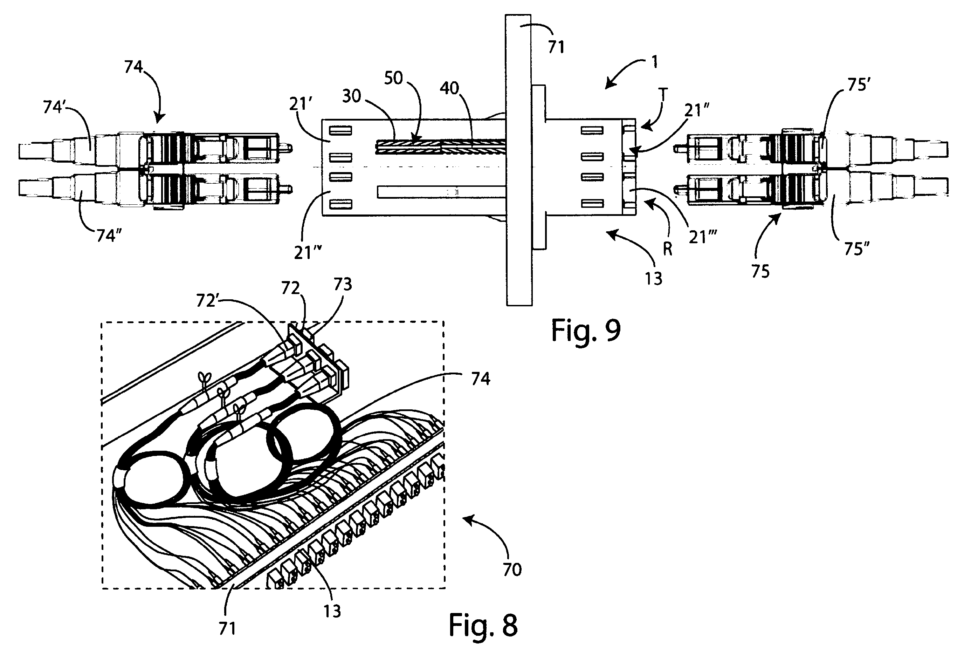

Figures 8 and 9 show a connection cabinet 70 for optical fiber, which comprises a plurality of laser transmitters 72 and a corresponding plurality of receivers. Of course, for each laser transmitter 72 a receiver is present in the same physical package. As known, moreover, each of said laser transmitters 72 exits in a single-mode optical fiber 73 on a connector 72'. The performance of an eventual laser transmitter 72 in multimode fiber is not affected by the presence of the adapter device 13.

Each laser transmitter 72/receiver pair is connected with a corresponding connection device 13 by an optical fiber cable 74. Each optical fiber cable 74 comprises a transmission single-mode optical fiber 74', connected with the input connector 21' of the transmission section T of the respective connection device 13, and comprises a receiving optical fiber 74", connected with the input connector 21^{iv} of the receiving section R of the same connection device 13.

Optical fibers 75' and 75" of the optical fiber cable 75, which transmits/receives the signal, are connected to the output connectors 21 " and 21''' respectively of the transmission section T and of the receiving section R, which are respectively opposed to the connectors 21' and 21^{iv}.

The adapter devices 13 are fixed to or integral with the distribution panel 71 of the connection cabinet 70 for optical fiber.

As it can be seen, the use of only output optical fibers from transmitter 72 can significantly reduce the overall implementation costs.

Also, since all the dimensions of the adapter 13, except the length, are exactly identical to those of a standard IEC adapter, users of the connector will not see any difference from the standard adapters, except that the input ports are not equivalent, as the transmitter have to be connected to the transmission section T of the connection device according to the invention, which includes offset multimode fiber portions 30 and 40.

This invention reduces the distortion in signals propagating in multimode fiber cables at frequencies higher than or equal to 1 Gigabit per second.

Adapter devices for multimode fiber according to the present invention apply, as above said, to cabinets for optical fibers. Optical data signals can be launched in a fiber so as to increase the connection distance among network devices, maintaining a signal quality necessary to meet communication standards such as IEEE 802.3-2002, IEEE 802.3 BA and IEEE 802.3aq for communication over Ethernet. Being it a physical alternative implementation to the current modal conditioning offset tatchcord, the increase of the connection distance between network devices may be possible with a substantial cost reduction compared to current solutions on the market.

The present invention has been described for illustrative but not limitative purposes, according to its preferred embodiments, but it is to be understood that modifications and/or changes may be introduced by those skilled in the art without departing from the relevant scope as defined in the enclosed claims.

## Claims

1. Connection device (11; 12; 13) for optical fibers, having a transmission section (T) comprising
an input connector (21'), to which a single mode or monomodal optical fiber (74') can be coupled,
an output connector (21 "), to which a multimodal optical fiber (75') is coupleable, and
a first and a second portion (30, 40) of multimodal optical fibers offset joined together at a respective end, said optic fiber first portion (30) having the other not joined end arranged in said input connector (21'), so as to be connectable with said single mode optical fiber (74'), and said optical fiber second portion (40) having the other not joined end arranged in said output connector (21"), so as to be connectable with said multimodal optical fiber (75').

2. Connection device (11; 12; 13) according to claim 1, **characterized in that** said first and second portions (30, 40) of multimodal optical fibers are inserted in a ferrule made of zirconia (50) or equivalent material.

3. Connection device (11; 12; 13) according to any of the preceding claims, **characterized in that** it comprises a containment shell (20) wherein a housing for the ferrule (50) is obtained.

4. Connection device (11; 12; 13) according to claim 3, **characterized in that** said containment shell (20) comprises tongues (22) for allowing the insertion or the extraction of said optical fibers (74', 75') to be connected with said input (21') and output (21 ") connectors.

5. Connection device (11; 12; 13) according to any of the preceding claims, **characterized in that** each one of said input and output connectors (21', 21") is provided with fixing means (23), suitable to keep in position the connected optical fiber (74', 75'), so that the core of said optical fiber (74', 75') is aligned to the core (31, 41) of the portion (30, 40) of the optical fibers of the input connector (21') or of the output connector (21 ").

6. Connection device (11; 12; 13) according to any of the preceding claims, **characterized in that** it comprises a receiving section (R), in its turn provided with an input connector (21^{iv}) and an output connector (21'''), a fiber optic (74", 75") being connectable to each one of said connectors (21"', 21^{iv}).

7. Connection cabinet (70) for optical fiber, comprising
a plurality of optical transmitters (72), such as a laser or a LED (Light Emitting Diode), each one of which emits the output optical signal in a single mode optical fiber (73) to an end of which a connector (72') is provided, and
a corresponding plurality of receivers,
**characterized in that** it comprises
a distribution panel (71), provided with a plurality of connection devices (11; 12; 13) as defined in claims 1-6, a connection optical fiber (74') being connected with the connector (72') of each optical transmitter (72), said connection optical fiber (74') being further connected with said input connector (21') of said transmission section (T) of a respective connection device (11; 12; 13).

8. Cabinet (70) according to claim 7, **characterized in that** said connection optical fiber (74') is of monomodal type.

9. Cabinet (70) according to anyone of claims 7 or 8, **characterized in that** each one of said adapter devices (11; 12; 13) is fixed to or integrated in said distribution panel (71).

10. Cabinet (70) according to anyone of claims 7 or 9, **characterized in that** each receiver is connected with an optical fiber (74"), said optical fiber (74") being in turn connected with said input connector (21^{iv}) of said receiving section (R) of the respective connection device (12; 13).
